**Europäisches Patentamt**

**European Patent Office**

**Office européen des brevets**

(19)

(11) Numéro de publication: **0 253 735
B1**

(12) # FASCICULE DE BREVET EUROPEEN

(45) Date de publication du fascicule du brevet:
24.01.90

(51) Int. Cl.⁴: **F16H 25/22**

(21) Numéro de dépôt: 87401665.2

(22) Date de dépôt: 16.07.87

(54) Vérin électrique à vis creuse à billes.

(30) Priorité: 18.07.86 FR 8610644

(43) Date de publication de la demande:
20.01.88 Bulletin 88/3

(45) Mention de la délivrance du brevet:
24.01.90 Bulletin 90/4

(84) Etats contractants désignés:
DE GB IT

(56) Documents cités:
EP-A- 0 095 267
DE-A- 1 914 550
DE-B- 1 167 431
DE-B- 1 650 485
US-A- 4 179 944
US-A- 4 232 562

PATENT ABSTRACTS OF JAPAN,
vol. 8, no. 112 (M-298)[1549], 25 mai 1984; &
JP-A-59 19 762 (KOMATSU SEISAKUSHO
K.K.) 01-02-1984

(73) Titulaire: AUTOMOBILES PEUGEOT, 75, avenue de la
Grande Armée, F-75116 Paris(FR)
Titulaire: AUTOMOBILES CITROEN, 62 Boulevard
Victor-Hugo, F-92200 Neuilly-sur-Seine(FR)

(72) Inventeur: Van Oost, Daniel Michel, 11, rue des Vieux
Gagnons, F-91460 Marcoussis(FR)
Inventeur: Francois, Christian, 96, rue de Tolbiac,
F-75013 Paris(FR)

(74) Mandataire: Boivin, Claude, 9, rue Edouard-Charton,
F-78000 Versailles(FR)

EP 0 253 735 B1

ACTORUM AG

## Description

On connait des vérins électriques propres à déplacer linéairement une charge et qui comprennent un moteur électrique, des moyens comportant un écrou et une vis à billes pour transformer le mouvement de rotation de l'arbre du moteur en un déplacement linéaire de la charge, des moyens pour empêcher la vis de tourner et des moyens pour empêcher l'écrou de se déplacer axialement, la vis comportant des moyens de liaison à une charge située à une extrémité de la vis alors que l'écrou est relié à l'arbre de sortie du moteur de façon à être entraîné en rotation par ce moteur. Le brevet US 4,179,944 décrit un vérin de ce type. Mais dans les vérins de ce genre actuellement connus, la vis en bout de course peut fléchir sous l'influence de la charge, ce qui nuit à la précision, en particulier quand le vérin comporte des moyens d'asservissement comprenant un capteur de déplacement linéaire.

La présente invention a pour objet un vérin électrique qui est très précis.

Ce vérin est caractérisé en ce que le corps du vérin est cylindrique et en ce que la vis est solidaire, de son côté opposé à la charge par rapport au moteur, d'un palier qui peut coulisser dans le corps, ledit palier étant, muni d'une clavette engagée dans une rainure prévue sur la face interne du corps.

Dans un mode de réalisation particulier de l'invention, le vérin comporte des moyens d'asservissement comprenant un capteur de déplacement linéaire qui est disposé dans un perçage axial de la vis et dont la tête est mobile avec cette vis.

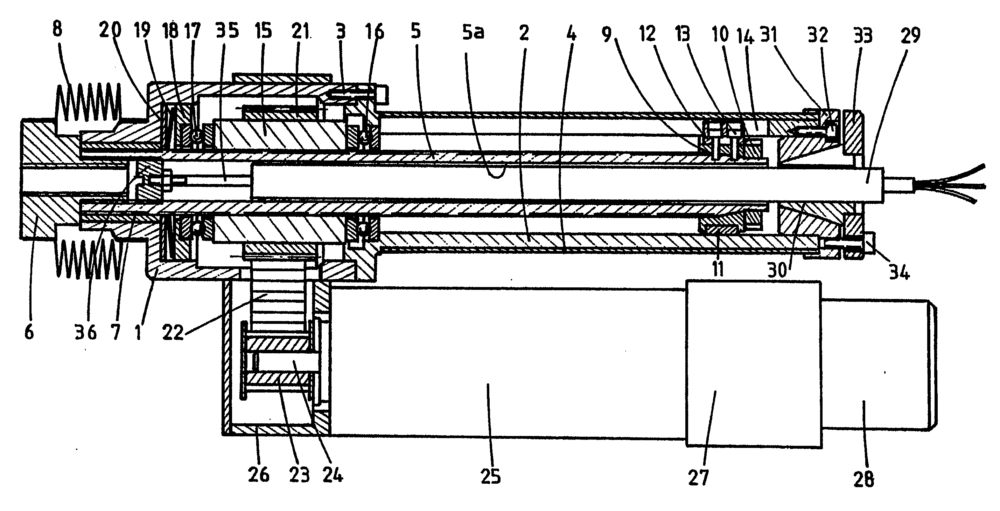

On a décrit ci-après, à titre d'exemple non limitatif, un mode de réalisation du vérin électrique selon l'invention avec référence à la Figure Unique du dessin qui est une vue en coupe axiale de ce vérin.

Tel qu'il est représenté au dessin, le vérin électrique comprend un corps formé de deux éléments cylindriques 1 et 2 assemblés l'un à l'autre par des vis telles que 3. L'élément 2 est recouvert par un tube de protection 4.

Dans le corps du vérin peut se déplacer axialement une vis creuse à billes 5 dont l'extrémité avant située du côté de la charge porte un embout de fixation 6 fixé dans un taraudage de la vis. Cette extrémité est guidée en translation par un palier de guidage avant 7 fixé dans l'élément 1 et est protégée par un soufflet 8 reliant l'embout 6 à l'élément 1 du corps. L'extrémité arrière de la vis présente une partie tronconique terminée par un filetage et sur laquelle est montée une bague de guidage 9 bloquée par serrage à l'aide d'un écrou 10 vissé sur l'extrémité arrière filetée de la vis; cette bague de guidage est entourée par un segment 11 en une matière synthétique qui améliore le frottement. Une clavette 12 est fixée par des vis 13 sur la bague 9 et engagée dans une rainure 14 usinée sur la face interne de l'élément 2 du corps, ce qui empêche la vis creuse 5 de tourner.

Sur l'extrémité avant de la vis 9 est monté un écrou à billes 15 qui est calé en translation d'un côté par une butée à billes 16 s'appuyant sur l'élément 2 et de l'autre côté par une autre butée à billes 17 s'appuyant sur l'élément 1 par l'intermédiaire d'une bague de centrage 18, d'une rondelle élastique 19 et d'une rondelle d'appui 20. Sur cet écrou à billes 15 est calé un pignon cranté 21 qui est relié par une courroie crantée 22 à un pignon cranté 23 fixé sur l'arbre de sortie 24 d'un moteur d'un moteur électrique 25 à courant continu, à deux sens de rotation; la transmission est protégée par un capot 26 fixé sur l'élément 1 du corps. Le moteur électrique 25 est équipé d'un frein 27 et d'une génératrice tachymétrique 28.

Dans le perçage axial 5a de la vis 5 est disposé un capteur de déplacement 29, de type potentiométrique qui est fixé à l'arrière de l'élément de corps 2 par l'intermédiaire d'une pince fendue 30 engagée dans un manchon porte-pince 31 fixé à l'élément 2 par des vis 32; la pince est serrée dans le manchon par une bague 33 qui est fixée à l'élément 2 par des vis 34. Le manchon 31 maintient le tube de protection 4 sur l'élément 2 du corps. La tête mobile 35 du capteur 29 est fixée à un bouchon 36 qui est vissé dans un taraudage de la vis 5; la tête du capteur se déplace ainsi en même temps que la vis.

## Revendications

1. Vérin électrique propre à déplacer linéairement une charge et qui comprend un moteur électrique (25), des moyens comportant un écrou (15) et une vis (5) à billes pour transformer le mouvement de rotation de l'arbre (24) du moteur (25) en un déplacement linéaire de la charge, des moyens (12) pour empêcher la vis (5) de tourner et des moyens (16 et 17) pour empêcher l'écrou (15) de se déplacer axialement, la vis (5) comportant des moyens de liaison (6) à une charge située à une extremité de la vis alors que l'écrou (15) est relié à l'arbre de sortie (24) du moteur (25) de façon à être entraîné en rotation par ce moteur, caractérisé en ce que le corps du vérin est cylindrique et en ce que la vis (5) est solidaire, de son côté opposé à la charge par rapport au moteur, d'un palier (9) qui peut coulisser dans le corps, ledit palier (9) étant muni d'une clavette (12) engagée dans une rainure (14) prévue sur la face interne du corps.

2. Vérin selon la revendication 1, caractérisé en ce qu'il comporte des moyens d'asservissement comprenant un capteur (29) de déplacement linéaire qui est disposé dans un perçage axial (5a) de la vis et dont la tête (35) est mobile avec cette vis.

3. Vérin selon la revendication 1 ou 2, caractérisé en ce que la vis (5) est montée coulissante, du côté de la charge, dans un palier de guidage (7) fixé dans le corps du vérin.

4. Vérin selon la revendication 2 ou 3, caractérisé en ce que le capteur de déplacement (29) est fixé en porte-à-faux au corps du vérin, du côté opposé à la charge.

5. Vérin selon la revendication 4, caractérisé en ce que la vis (5) comporte un taraudage dans lequel est vissé un embout de fixation (6) à la charge.

6. Vérin selon la revendication 5, caractérisé en ce que dans le taraudage est également vissé un bouchon (36) fixé à la tête (35) du capteur (29).

7. Vérin selon l'une des revendications 1 à 6, caractérisé en ce que l'arbre de sortie (24) du moteur (25) porte un pignon cranté (23) relié par une courroie crantée (22) à un pignon (21) calé extérieurement sur l'écrou (15).

## Patentansprüche

1. Elektrisches Stellglied, das zur linearen Verschiebung einer Last geeignet ist und einen Elektromotor (25) aufweist, sowie eine Schraubenmutter (15) und eine Kugelumlaufspindel (25) umfassende Mittel zur Umwandlung der Rotationsbewegung der Welle (24) des Motors (25) in eine lineare Verschiebung der Last, Mittel (12) zur Verhinderung einer Drehung der Spindel (5) und Mittel (16 und 17) zur Verhinderung einer axialen Verschiebung der Schraubenmutter (15), wobei die Spindel (5) Mittel (6) zur Verbindung mit einer an einem Ende der Spindel gelegenen Last aufweist, während die Schraubenmutter (15) mit der Abtriebswelle (24) des Motors (25) derart verbunden ist, daß sie durch diesen Motor in Drehung versetzt wird, dadurch gekennzeichnet, daß das Gehäuse des Stellgliedes zylindrisch ausgebildet ist und daß die Spindel (5) an ihrer in Bezug auf den Motor der Last gegenüberliegenden Seite fest mit einem im Gehäuse verschiebbaren Lager (9) verbunden ist und besagtes Lager (9) mit einem Keil (12) versehen ist, der in eine an der Innenseite des Gehäuses angeordneten Nut (14) eingreift.

2. Stellglied nach Anspruch 1, dadurch gekennzeichnet, daß es Mittel zur Regelung aufweist mit einem Sensor (29) für die lineare Verschiebung, der in einer axialen Bohrung (5a) der Spindel angeordnet ist und dessen Kopf (35) zusammen mit dieser Spindel bewegbar ist.

3. Stellglied nach Anspruch 1 oder 2, dadurch gekennzeichnet, daß die Spindel (5) an der Seite der Last gleitend in einem Führungslager (7) montiert ist, das im Gehäuse des Stellgliedes befestigt ist.

4. Stellglied nach den Ansprüchen 2 oder 3, dadurch gekennzeichnet, daß der Sensor (29) für die Verschiebung an der der Last gegenüberliegenden Seite freitragend im Gehäuse des Stellgliedes befestigt ist.

5. Stellglied nach Anspruch 4, dadurch gekennzeichnet, daß die Spindel (5) ein Innengewinde aufweist, in welches ein Ansatzstück (6) zur Befestigung der Last eingeschraubt ist.

6. Stellglied nach Anspruch 5, dadurch gekennzeichnet, daß in das Innengewinde außerdem ein Stopfen (36) eingeschraubt ist, der am Kopf (35) des Sensors (29) befestigt ist.

7. Stellglied nach einem der Ansprüche 1 bis 6, dadurch gekennzeichnet, daß die Abtriebswelle (24) des Motors (25) ein geripptes Ritzel (23) trägt, das über einen gerippten Treibriemen (22) mit einem Ritzel (21) verbunden ist, welches auf der Außenseite der Schraubenmutter (15) festgekeilt ist.

## Claims

1. Electric jack adapted to move a load linearly and which comprises an electric motor (25), means comprising a nut (15) and a ball screw (5) for transforming the rotational movement of the shaft (24) of the motor (25) into a linear movement of the load, means (12) for preventing the screw (5) from rotating and means (16, 17) for preventing the nut (15) from moving axially, the screw (5) comprising means (6) for connection to a load situated at one end of the screw, whereas the nut (15) is connected to the output shaft (24) of the motor (25) so as to be driven in rotation by this motor, characterized in that the body of the jack is cylindrical and in that the screw (5) is fast, on its side opposite the load with respect to the motor, with a bearing (29) which may slide in the body, said bearing (9) being provided with a key (12) engaged in a groove (14) formed on the inner face of the body.

2. Jack according to claim 1, characterized in that it comprises servo control means including a linear displacement sensor (29) which is disposed in an axial bore (5a) of the screw and the head (35) of which is movable with this screw.

3. Jack according to claim 1 or 2, characterized in that the screw (5) is mounted for sliding, on the same side as the load, in a guide bearing (7) fixed in the body of the jack.

4. Jack according to claim 2 or 3, characterized in that the displacement sensor (29) is fixed cantilever fashion to the body of the jack, on the side opposite the load.

5. Jack according to claim 4, characterized in that the screw (5) comprises a tapped portion in which an end piece (6) is screwed for fixing to the load.

6. Jack according to claim 5, characterized in that, in the tapped portion is also screwed a plug (36) fixed to the head (35) of the sensor (29).

7. Jack according to one of claims 1 to 6, characterized in that the output shaft (24) of the motor (25) carries a notched pinion (23) connected by a notched belt (22) to a pinion (21) fitted externally on the nut (15).

EP 0 253 735 B1